# DEMANDE DE BREVET EUROPEEN

(11) **EP 3 331 143 A1**
(43) Date de publication de la demande: **06.06.2018**
(21) Numéro de dépôt: 17205307.6
(22) Date de dépôt: 04.12.2017
(51) Int. Cl.: H02M 1/12, H02H 3/33, H02H 9/00, H02H 11/00, H02H 3/04

(54) **SYSTEME DE FILTRATION DES COURANTS PORTEURS EN LIGNE COMPRENANT UNE DETECTION AUTOMATIQUE DE DEFAILLANCES**

(30) Priorité: 02.12.2016 FR 1670729
(71) Demandeur: Pierronnet, Andre, 33110 Le Bouscat (FR)
(72) Inventeur: Pierronnet, Andre, 33110 Le Bouscat (FR)
(74) Mandataire: Cabinet Plasseraud

(57) **Abrégé**

L'invention a pour objet un système de filtration permettant l'atténuation des fréquences de courants porteurs en ligne, sur un point de distribution de courant alternatif présentant une phase (P) et un neutre (N), ce système comportant un filtre du type L-C comprenant une induction (L) disposée en série et une capacité (C) disposée en parallèle, ce système étant remarquable en ce qu'il comporte un dispositif de coupure (10) du raccordement de la capacité (C) qui la met hors circuit en cas de défaillance de cette capacité (C), et un dispositif de détection automatique de cette coupure.

## Description

La présente invention concerne un système de filtration permettant l'atténuation des fréquences de courants porteurs en ligne, sur un réseau de distribution de courant alternatif. L'électricité distribuée par les réseaux de distribution d'électricité en courant monophasé ou triphasé, qui peuvent être publics ou privés, présentant une fréquence principale de 50 ou 60Hz, comporte souvent des moyennes ou hautes fréquences additionnelles, volontaires ou parasites, qui s'ajoutent sur la fréquence de base.

En effet de plus en plus d'informations circulent sur les réseaux de distribution d'électricité, notamment avec les courants porteurs en ligne « CPL », sous forme de moyennes ou hautes fréquences. On utilise ces courants notamment pour des communications Internet, des communications entre des compteurs communicants, ou des concentrateurs d'informations à des fins de transmission de données.

On peut aussi avoir sur les points de distribution d'électricité des fréquences parasites dues à des équipements électriques voisins qui renvoient sur le réseau des parasites, comme par exemple un variateur de fréquence, une alimentation à découpage ou un moteur à induction. Ces différentes fréquences volontaires ou parasites transmises chez un utilisateur par son point de distribution, peuvent perturber le fonctionnement d'appareils électriques ou d'appareils de communication de l'utilisateur, en particulier son réseau propre de courant porteur en ligne CPL, ou sa domotique utilisant aussi des courants CPL.

Ces fréquences peuvent aussi être ressenties par certaines personnes hautement sensibles aux ondes électromagnétiques, appelées personnes électro hyper sensibles « HES », qui sont perturbées par les ondes émises par ces gammes de fréquences.

Pour éviter ces problèmes il est connu de réaliser des filtres à fréquences du type L-C, utilisant une induction en série et une capacité en parallèle, prévus pour atténuer de façon significative les fréquences des courants porteurs en ligne CPL, afin de ne pas perturber des équipements électriques et de réduire les effets sur les personnes HES.

Toutefois les filtres existants ne permettent pas de prévenir les utilisateurs en cas de défaillance de son fonctionnement. En effet tant que la distribution d'électricité continue avec un filtre inopérant, l'utilisateur peut ne pas s'en rendre compte car les effets des fréquences indésirables ne sont pas toujours facilement perceptibles. Ces fréquences peuvent causer pendant un certain temps des désagréments ou des dégâts.

La présente invention a notamment pour but d'éviter ces inconvénients de la technique antérieure.

Elle propose à cet effet un système de filtration permettant l'atténuation des fréquences de courants porteurs en ligne, sur un point de distribution de courant alternatif présentant une phase et un neutre, ce système comportant un filtre du type L-C comprenant une induction disposée en série et une capacité disposée en parallèle, ce système étant remarquable en ce qu'il comporte un dispositif de coupure du raccordement de la capacité qui la met hors circuit en cas de défaillance de cette capacité, et un dispositif de détection automatique de cette coupure.

Un avantage de ce système de filtration est que dans le cas d'un claquage de la capacité la rendant passante, avec la mise en oeuvre du dispositif de coupure qui la met hors circuit afin d'assurer la sécurité, sans interrompre l'alimentation en courant pour l'utilisateur, le dispositif de détection automatique de la coupure permet de prévenir aussitôt l'utilisateur que le filtre n'est plus opérationnel.

On peut alors intervenir rapidement pour réparer le filtre, et éviter une prolongation des désagréments.

Le système de filtration selon l'invention peut comporter de plus une ou plusieurs des caractéristiques suivantes, qui peuvent être combinées entre elles.

Avantageusement, le système de filtration comporte un disjoncteur de protection disposé entre l'induction et le dispositif de coupure.

En particulier, le dispositif de coupure peut être un fusible.

Avantageusement, le dispositif de détection automatique est un relais comportant une bobine d'excitation branchée aux bornes du dispositif de coupure, qui ferme un contact.

Avantageusement, le système de filtration comporte un moyen d'avertissement misen oeuvre par les détections automatiques de coupure.

Dans ce cas, avantageusement le système de filtration comporte une première commande manuelle pouvant actionner le moyen d'avertissement.

En particulier, le moyen d'avertissement peut être un témoin lumineux alimenté par le contact du relais.

Avantageusement, le système de filtration comporte un circuit de test indiquant une inversion du branchement de ce système entre la phase et le neutre.

Avantageusement, le système de filtration comporte une deuxième commande manuelle pouvant actionner un moyen d'avertissement de l'inversion du branchement.

Dans ce cas, le circuit de test peut comporter branché en série entre l'inductance et une terre, la deuxième commande manuelle établissant un contact, et le moyen d'avertissement formé par un témoin lumineux.

D'autres caractéristiques et avantages ressortiront de la description qui va suivre de l'invention, donnée à titre d'exemple uniquement, en regard des dessins annexés sur lesquels:
- la figure 1 est un schéma d'un circuit électrique d'un système de filtration selon l'invention ; et
- la figure 2 est un graphique présentant l'atténuation en fonction de la fréquence, donnée par ce système utilisé dans différentes configurations.

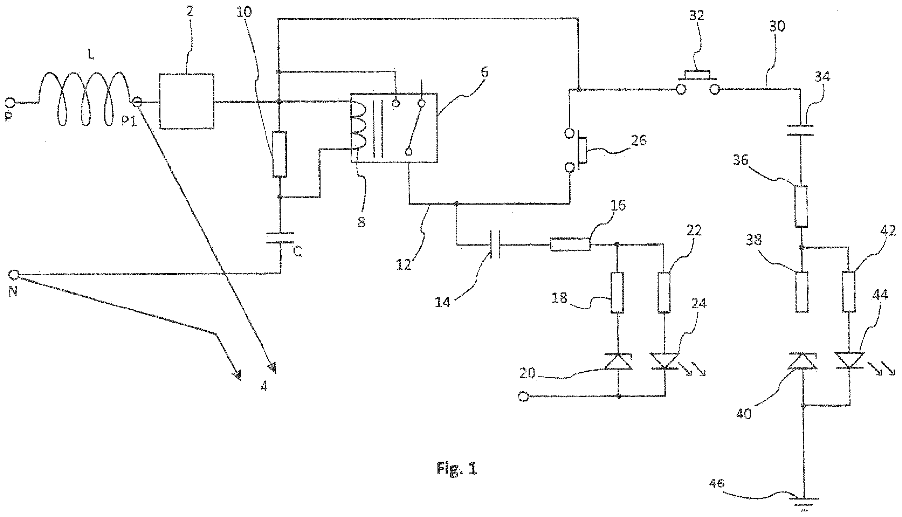

La figure 1 présente un système de filtration disposé sur un point de distribution d'électricité comportant les protections habituelles, avec notamment pour un particulier un compteur et un disjoncteur de branchement, qui distribue une phase P et un neutre N vers un circuit utilisateur à protéger 4.

Le système de filtration comporte d'abord sur la phase P une inductance L, qui délivre le courant à une phase filtrée P1. Le circuit utilisateur 4 branché sur la phase filtrée P1 ainsi que sur le neutre N, comporte un tableau de répartition comprenant ses protections habituelles. La phase filtrée P1 et le neutre N alimente un disjoncteur d'entrée 2. La phase P1 sortant du disjoncteur 2 alimente à son tour un fusible 10, puis disposée en série avec ce fusible une capacité principale C reliée au neutre N.

L'inductance L disposée en série sur la phase ainsi que la capacité principale C disposée en parallèle, constitue un filtre du premier ordre qui atténue les fréquences moyennes et élevées. En particulier en utilisant une inductance L de 66 µH et une capacité principale C de 40µF, on obtient pour une alimentation de 60A les valeurs d'atténuation présentées ci-après, donnant des bonnes performances. En variante on peut disposer plusieurs inductances ou plusieurs capacités pour obtenir des valeurs équivalentes. On peut aussi disposer une inductance sur le neutre.

On notera que dans le système de filtration seule l'inductance L laisse passer la totalité de la puissance délivrée au circuit utilisateur 4, elle présente alors une section de cuivre importante pour limiter les pertes et les échauffements. Le circuit électrique du système de filtration disposé après cette inductance L utilisant un fil de section nettement réduite, est avantageusement protégé par le disjoncteur d'entrée 2.

Un relais 6 comporte une bobine d'excitation 8 disposée en parallèle du fusible 10, qui établit quand cette bobine est alimentée, un contact entre la phase filtrée sortant du disjoncteur 2 et un circuit d'alarme 12. Tant que la capacité principale C est opérationnelle, le courant passant dans le fusible 10 est faible ce qui maintient son intégrité. On n'a alors pas de différence de potentiel aux bornes de la bobine d'excitation 8, le relais 6 reste ouvert.

Dans le cas où la capacité C claque en devenant passante, le courant trop élevé dans le fusible 10 le fait sauter ce qui met hors circuit cette capacité en évitant un court-circuit. En même temps la différence de potentiel aux bornes du fusible 10 s'applique sur la bobine d'excitation 8, ce qui ferme le contact du relais 6 en alimentant le circuit d'alarme 12.

Le circuit d'alarme 12 comporte en série un premier condensateur 14, puis une première résistance 16 qui alimente en parallèle d'une part une deuxième résistance 18 puis une diode Zenner 20, et d'autre part une troisième résistance 22 puis une première diode électroluminescente « LED » 24, ces diodes étant enfin reliées au neutre N.

L'allumage automatique de la première LED 24 signale une défaillance de la capacité principale C. Dans ce cas le circuit utilisateur 4 reste alimenté par le point de distribution de courant, ce qui ne met pas en panne l'utilisateur pour sa fourniture d'énergie. Cependant cet utilisateur est prévenu au plus tôt de la défaillance.

En variante le circuit d'alarme 12 peut être relié à d'autres moyens d'alarme, comme un signal sonore, ou une commande à distance vers un ordinateur ou un téléphone portable, pour permettre au plus tôt une intervention de réparation.

Le circuit d'alarme 12 peut être aussi alimenté par un premier bouton-poussoir 26 relié à la sortie du disjoncteur 2, pour alimenter ce circuit directement afin de réaliser un test. En cas d'appui sur le premier bouton-poussoir 26, la première diode électroluminescente 24 doit s'allumer ce qui permet de vérifier son bon fonctionnement.

La sortie du disjoncteur 2 alimente aussi directement un circuit de test 30 par l'intermédiaire d'un deuxième bouton-poussoir 32, qui comporte successivement en série une deuxième capacité 34, puis une quatrième résistance 36.

La quatrième résistance 36 alimente en parallèle d'une part une cinquième résistance 38 puis une diode Zenner 40, et d'autre part une sixième résistance 42 puis une deuxième diode 44, ces diodes étant enfin reliées à la terre 46.

Le circuit de test 30 permet d'indiquer une inversion de phase sur le branchement du système de filtration. Pour un branchement correct du système de filtration avec l'inductance L reliée à la phase P, en appuyant sur le deuxième bouton-poussoir 32 on alimente avec cette phase la deuxième diode LED 44 reliée à la terre 46, ce qui allume cette diode.

Pour un branchement incorrect du système de filtration avec l'inductance L reliée au neutre N, en appuyant sur le deuxième bouton-poussoir 32 la deuxième diode LED 44 reliée entre ce neutre et la terre 46 ne s'allume pas. On vérifie de cette manière le bon branchement du système de filtration.

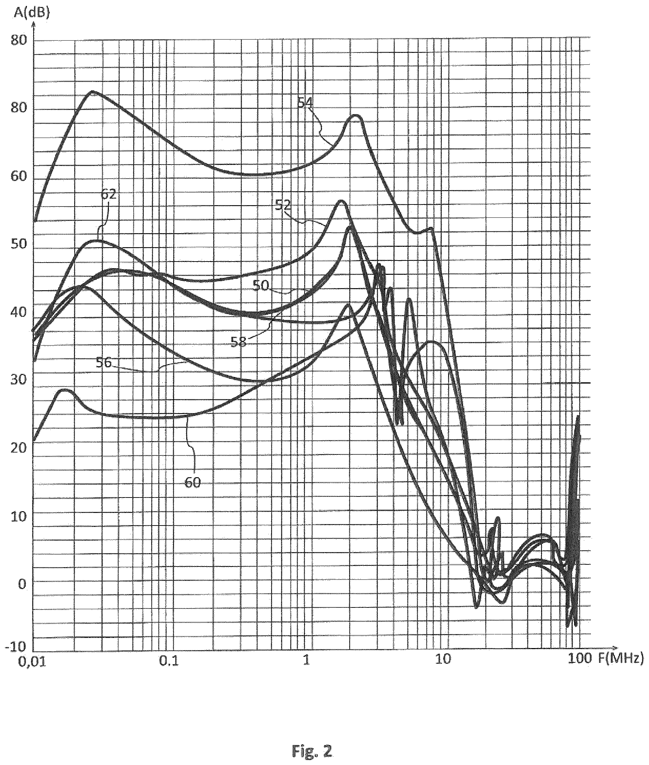

La figure 2 présente en fonction de la fréquence F exprimée en MHz sur une échelle logarithmique, des résultats de mesures de l'atténuation A des fréquences exprimée en dB, obtenus avec le filtre présenté ci-dessus utilisé dans différentes conditions.

Les cinq premières courbes 50 à 58 sont des mesures effectuées avec un générateur et un appareil de mesure présentant chacun une impédance de 50Ω. Les deux courbes suivantes 60, 62 sont des mesures effectuées avec les mêmes générateur et appareil de mesure, recevant pour le générateur une résistance en parallèle de 0,1Ω, et pour l'appareil de mesure une résistance en série de 50Ω.

La première courbe 50 est une mesure effectuée avec le système de filtration de base présenté ci-dessus, comportant l'inductance L et la capacité C.

La deuxième courbe 52 est une mesure effectuée avec un système de filtration comportant deux inductances L disposées en série au lieu d'une seule.

La troisième courbe 54 est une mesure effectuée avec deux ensembles comportant chacun une inductance L et une capacité principale C, disposés en série.

La quatrième courbe 56 est une mesure effectuée avec le système de filtration de base, présentant en série un fil électrique de longueur 1m installé sur le neutre N, et sur la phase filtrée P1 entre l'inductance L et la capacité principale C.

La cinquième courbe 58 est une mesure effectuée avec le système de filtration de base, présentant en série un fil électrique de longueur 0,20m sur le neutre N.

La sixième courbe 60 est une mesure effectuée avec le système de filtration de base.

La septième courbe 62 est une mesure effectuée avec deux ensembles comportant chacun une inductance L et une capacité principale C, disposés en série.

On notera que l'ensemble des systèmes de filtration présente une capacité de filtration supérieure à 20dB pour des fréquences comprises entre 0,01 et 4MHz, et comprises entre 0,01 et 10 MHz pour certains systèmes. Les meilleurs résultats sont donnés par la troisième courbe 54 indiquant des valeurs proches de 60dB.

On obtient avec le système de filtration selon l'invention une protection efficace contre les ondes électromagnétiques générées par les moyennes et hautes fréquences, permettant de protéger en particulier les personnes hautement sensibles EHS ou des transmissions de données, avec un grand niveau de sécurité grâce aux indicateurs de fonctionnement prévus.

Avantageusement, le système de filtration est installé dans un boîtier compatible avec les coffrets de distribution comprenant des barrettes standardisées de fixation de modules, ce qui permet de l'intégrer et de le raccorder facilement sur une installation existante.

## Revendications

1. Système de filtration permettant l'atténuation des fréquences de courants porteurs en ligne, sur un point de distribution de courant alternatif présentant une phase (P) et un neutre (N), ce système comportant un filtre du type L-C comprenant une induction (L) disposée en série et une capacité (C) disposée en parallèle, **caractérisé en ce qu'**il comporte un dispositif de coupure (10) du raccordement de la capacité (C) qui la met hors circuit en cas de défaillance de cette capacité (C), et un dispositif de détection automatique de cette coupure.

2. Système de filtration selon la revendication 1, **caractérisé en ce qu'**il comporte un disjoncteur de protection (2) disposé entre l'induction (L) et le dispositif de coupure (10).

3. Système de filtration selon la revendication 1 ou 2, **caractérisé en ce que** le dispositif de coupure (10) est un fusible.

4. Système de filtration selon l'une quelconque des revendications précédentes, **caractérisé en ce que** le dispositif de détection automatique est un relais (6) comportant une bobine d'excitation (8) branchée aux bornes du dispositif de coupure (10), qui ferme un contact.

5. Système de filtration selon l'une quelconque des revendications précédentes, **caractérisé en ce qu'**il comporte un moyen d'avertissement (24) mis en oeuvre par les détections automatiques de coupure.

6. Système de filtration selon la revendication 5, **caractérisé en ce qu'**il comporte une première commande manuelle (26) pouvant actionner le moyen d'avertissement (24).

7. Système de filtration selon les revendications 4 et 5, **caractérisé en ce que** le moyen d'avertissement (24) est un témoin lumineux alimenté par le contact du relais (6).

8. Système de filtration selon l'une quelconque des revendications précédentes, **caractérisé en ce qu'**il comporte un circuit de test (30) indiquant une inversion du branchement de ce système entre la phase (P) et le neutre (N).

9. Système de filtration selon la revendication 8, **caractérisé en ce qu'**il comporte une deuxième commande manuelle (32) pouvant actionner un moyen d'avertissement (44) de l'inversion du branchement.

10. Système de filtration selon la revendication 8 ou 9, **caractérisé en ce que** le circuit de test (30) comporte, branché en série entre l'inductance (L) et une terre (46), la deuxième commande manuelle (32) établissant un contact, et le moyen d'avertissement (44) formé par un témoin lumineux.
